# EUROPÄISCHE PATENTSCHRIFT

(11) **EP 1 343 719 B1**
(45) Veröffentlichungstag und Bekanntmachung des Hinweises auf die Patenterteilung: **18.08.2004**
(21) Anmeldenummer: 01985870.3
(22) Anmeldetag: 12.12.2001
(51) Int. Cl.: C01B 21/00

(54) **VERFAHREN ZUR KONTINUIERLICHEN HERSTELLUNG VON HYDROXYLAMMONIUMSALZEN**
METHOD FOR CONTINUOUSLY PRODUCING HYDROXYLAMMONIUM SALTS
PROCEDE DE PRODUCTION EN CONTINU DE SELS D'HYDROXYLAMMONIUM

(30) Priorität: 14.12.2000 DE 10062325
(43) Veröffentlichungstag der Anmeldung: 17.09.2003
(73) Patentinhaber: BASF AKTIENGESELLSCHAFT, 67056 Ludwigshafen (DE)
(72) Erfinder: BENDER, Michael, 67063 Ludwigshafen (DE); WILFINGER, Hans, Jörg, 67105 Schifferstadt (DE); SCHENKEL, Albert, 67071 Ludwigshafen (DE)
(86) Internationale Anmeldenummer: PCT/EP2001/014578
(87) Internationale Veröffentlichungsnummer: WO 2002/048031

(56) Entgegenhaltungen:
- EP-A- 0 059 366
- EP-A- 0 535 514
- FR-A- 2 121 005
- US-A- 3 313 595

## Beschreibung

Die vorliegende Erfindung betrifft ein Verfahren zur kontinuierlichen Herstellung von Hydroxylammoniumsalzen durch katalytische Reduktion von Stickstoffmonoxid mit Wasserstoff in verdünnter wässriger Lösung von Mineralsäure in mehreren hintereinander geschalteten Reaktionsstufen, dadurch gekennzeichnet, daß man
den Zufluß an verdünnter wässriger Lösung von Mineralsäure vor der Zuführung in die mehreren hintereinander geschalteten Reaktionsstufen in mindestens zwei Teilströme teilt,
einen ersten der genannten Teilströme der ersten Reaktionsstufe zuführt,
einen zweiten der genannten Teilströme einer anderen als der ersten Reaktionsstufe zuführt, wobei man den Zufluß an verdünnter wässriger Lösung von Mineralsäure in die mehreren hintereinander geschalteten Reaktionsstufen mittels des pH-Wertes dieser anderen als der ersten Reaktionsstufe steuert.

Die kontinuierliche Herstellung von Hydroxylammoniumsalzen durch katalytische Reduktion von Stickstoffmonoxid mit Wasserstoff in verdünnter wässriger Lösung von Mineralsäure in Gegenwart eines suspendierten Edelmetallkatalysators ist ein bekanntes Verfahren und beispielsweise in DE-C-1 177 118 beschrieben. Hierbei wird eine wässrige Lösung von Mineralsäure, die den Katalysator suspendiert enthält, durch mehrere hintereinander geschaltete Reaktionsstufen geleitet, in jede Reaktionsstufe ein Gemisch aus Stickstoffmonoxid und Wasserstoff geleitet und der letzten Reaktionsstufe katalysatorhaltige Hydroxylammoniumsalz-Lösung entnommen. Nachteilig bei diesem Verfahren ist die Bildung unerwünschter Nebenprodukte, wie Distickstoffmonoxid, Stickstoff und Ammoniumsalzen, die zu einer Verminderung der Ausbeute an Hydroxylammoniumsalz und zudem im Falle hoher Distickstoffmonoxid-Konzentrationen zu explosiblen Gemischen führt.

Zur Reduzierung der Bildung von Nebenprodukten bei dieser Reaktion wird in EP-B-0 059 366 vorgeschlagen, in der letzten Reaktionsstufe einen pH-Wert von kleiner 2,0 einzuhalten und mittels des pH-Wertes dieser letzten Reaktionsstufe den Zufluß an frischer wässriger Lösung von Mineralsäure zu steuern. Unbefriedigend bei dieser Verfahrensweise ist die Neigung von Meßgröße (pH-Wert der letzten Reaktionsstufe) und Steuergröße (Zufluß an wässriger Lösung von Mineralsäure in die erste Reaktionsstufe) zur Oszillation, die insbesondere bei hohen Stickstoffmonoxid-Umsätzen zu Ausbeuteverlusten infolge von Nebenprodukt-Bildung führt.

Der vorliegenden Erfindung lag die Aufgabe zugrunde, ein Verfahren bereitzustellen, das die kontinuierliche Herstellung von Hydroxylammoniumsalzen durch katalytische Reduktion von Stickstoffmonoxid mit Wasserstoff in verdünnter wässriger Lösung von Mineralsäure in mehreren hintereinander geschalteten Reaktionsstufen auf technisch einfache Weise ermöglicht unter Vermeidung der genannten Nachteile.

Demgemäß wurde das eingangs definierte Verfahren gefunden.

In der Regel wendet man Wasserstoff und Stickstoffmonoxid im Molverhältnis von 1,5:1 bis 6:1 an. Besonders gute Ergebnisse erhält man, wenn man darauf achtet, daß in den einzelnen Reaktionsstufen ein Molverhältnis von Wasserstoff zu Stickstoffmonoxid von 1,5:1 bis 2,5:1, insbesondere 2:1, aufrechterhalten wird.

Im allgemeinen verwendet man als Mineralsäure nichtreduzierende starke Mineralsäuren, wie Perchlorsäure, Salpetersäure, Schwefelsäure oder Phosphorsäure oder saure Salze, wie Ammoniumhydrogensulfat, oder deren Gemische. Bevorzugt kommen Schwefelsäure oder Ammoniumhydrogensulfat oder deren Gemische in betracht, insbesondere Schwefelsäure.

In der Regel sollte man von 4 bis 6 normalen wässrigen Lösungen der Mineralsäure ausgehen. Üblicherweise findet ein Abfall der Säurekonzentration über die Reaktionsstufen hinweg statt.

Die Umsetzung kann man vorteilhaft bei erhöhter Temperatur, vorzugsweise bei Temperaturen im Bereich von 30 bis 80°C, insbesondere 40 bis 60°C, durchführen.

Die Umsetzung kann man in der Regel im Bereich zwischen normalem Umgebungsdruck und erhöhtem Druck, beispielsweise einem Überdruck gegenüber Umgebungsdruck von bis zu 10 MPa, vorzugsweise bis zu 5 MPa, insbesondere bis zu 3 MPa, durchführen.

Als Katalysator für die Reduktion des Stickstoffmonoxids kommen vorteilhaft Edelmetallkatalysatoren, vorzugsweise Platinmetalle in Betracht, die im allgemeinen auf Träger, vorzugsweise auf Kohlenstoff, insbesondere auf Graphit, aufgebracht verwendet werden. Besonders bewährt hat sich Platin auf Kohlenstoff, insbesondere auf Graphit. Die Katalysatoren werden in fein verteilter Form als Suspension angewandt. Vorzugsweise hat ein solcher Katalysator einen Gehalt von 0,2 bis 5 Gewichtsprozent Platin. Vorteilhaft enthalten die Katalysatoren zusätzlich ein oder mehrere Elemente der 5. Gruppe des Periodensystems mit einem Atomgewicht über 31, der 6. Gruppe des Periodensystems mit einem Atomgewicht über 31 oder schwefelhaltige Verbindungen als vergiftendes Mittel. Geeignete Katalysatoren und deren Herstellung sind beispielsweise in DE-C-1 088 037, DE-C-920 963, DE-C-956 038, DE-C-945 752, EP-0 059 366, beschrieben.

Die Umsetzung wird in mehreren hintereinander geschalteten Reaktionsstufen durchgeführt. In der Regel wendet man 2 bis 10, vorzugsweise 4 bis 8 Reaktionsstufen an. Vorteilhaft stehen die Reaktionsstufen kommunizierend miteinander in Verbindung.

Zweckmäßig führt man den Reaktionsstufen wässrige Lösung von Mineralsäure zu, die den Katalysator suspendiert enthält.

Erfindungsgemäß teilt man den Zufluß an verdünnter wässriger Lösung von Mineralsäure vor der Zuführung in die mehreren hintereinander geschalteten Reaktionsstufen in mindestens zwei, wie zwei, drei oder vier, vorzugsweise zwei Teilströme.

Erfindungsgemäß führt man einen ersten der genannten Teilströme der ersten Reaktionsstufe zu und einen zweiten der genannten Teilströme einer anderen als der ersten Reaktionsstufe, vorzugsweise der letzten Reaktionsstufe, zu.

Setzt man zwei Teilströme ein, so sollte das Volumenstromverhältnis des ersten der genannten Teilströme zu dem zweiten der genannten Teilströme im Bereich von 100:1 bis 5:1, vorzugsweise 20:1 bis 10:1 liegen.

Der erste der genannten Teilströme durchfließt dann nacheinander die einzelnen Reaktionsstufen, wobei der Gehalt an Hydroxylammoniumsalz unter Verbrauch der Säure fortlaufend zunimmt.

Der letzten Reaktionsstufe wird das Reaktionsgemisch in dem Maße entnommen, wie den Reaktionsstufen verdünnte wässrige Lösung von Mineralsäure zugeführt wird.

Vorteilhaft beschickt man die Reaktionsstufen jeweils getrennt mit einem Gemisch aus Stickstoffmonoxid und Wasserstoff, sammelt die entstehenden Abgase und leitet sie, vorteilhaft nach Abreicherung von Nebenprodukten und Zugabe von Stickstoffmonoxid, den Reaktionsstufen, vorzugsweise der ersten Reaktionsstufe, zu.

Erfindungsgemäß steuert man den Zufluß an verdünnter wässriger Lösung von Mineralsäure in die mehreren hintereinander geschalteten Reaktionsstufen mittels des pH-Wertes der Reaktionsstufe, der man den zweiten der genannten Teilströme zuführt. Die Messung des pH-Wertes kann in an sich bekannter Weise kontinuierlich, beispielsweise mittels entsprechender kommerziell verfügbarer Elektroden, oder diskontinuierlich, beispielsweise mittels pH-Papier oder pH-Meßstäbchen, erfolgen.

Der genannte pH-Wert sollte vorteilhaft kleiner als 2 sein, vorzugsweise im Bereich von 0,9 bis 1,8 liegen. Setzt man als Mineralsäure Schwefelsäure ein, so hat sich ein pH-Wert im Bereich von 1,0 bis 1,5 als besonders vorteilhaft erwiesen.

Die Steuerung des genannten pH-Werts kann durch die Regelung der genannten Teilströme in technisch einfacher Weise erfolgen. In einer vorteilhaften Ausführungsform hält man den ersten Teilstrom konstant und regelt den genannten pH-Wert mittels des zweiten Teilstroms.

Hydroxylammoniumsalze, die nach dem erfindungsgemäßen Verfahren erhalten werden, eignen sich zur Herstellung von Cyclohexanonoxim, einer Ausgangsverbindung für die Herstellung von Caprolactam.

## Patentansprüche

1. Verfahren zur kontinuierlichen Herstellung von Hydroxylammoniumsalzen durch katalytische Reduktion von Stickstoffmonoxid mit Wasserstoff in verdünnter wässriger Lösung von Mineralsäure in mehreren hintereinander geschalteten Reaktionsstufen, **dadurch gekennzeichnet, daß** man
den Zufluß an verdünnter wässriger Lösung von Mineralsäure vor der Zuführung in die mehreren hintereinander geschalteten Reaktionsstufen in mindestens zwei Teilströme teilt,
einen ersten der genannten Teilströme der ersten Reaktionsstufe zuführt,
einen zweiten der genannten Teilströme einer anderen als der ersten Reaktionsstufe zuführt, wobei man den Zufluß an verdünnter wässriger Lösung von Mineralsäure in die mehreren hintereinander geschalteten Reaktionsstufen mittels des pH-Wertes dieser anderen als der ersten Reaktionsstufe steuert.

2. Verfahren nach Anspruch 1, wobei man einen zweiten der genannten Teilströme in die letzte der hintereinander geschalteten Reaktionsstufen leitet.

3. Verfahren nach Anspruch 1 oder 2, wobei man in der Reaktionsstufe, der man den zweiten der genannten Teilströme zuführt, einen pH-Wert von kleiner 2 einhält.

4. Verfahren nach den Ansprüchen 1 bis 3, wobei man als Mineralsäure Schwefelsäure einsetzt.

5. Verfahren nach den Ansprüchen 1 bis 4, wobei man als Mineralsäure Schwefelsäure einsetzt, den zweiten der genannten Teilströme in die letzte der hintereinander geschalteten Reaktionsstufen leitet und in dieser Stufe einen pH-Wert im Bereich von 1,0 bis 1,5 einhält.

## Claims

1. A process for the continuous preparation of hydroxylammonium salts by catalytic reduction of nitrogen monoxide by means of hydrogen in a dilute aqueous solution of mineral acid in a plurality of reaction stages connected in series, which comprises
dividing the incoming stream of dilute aqueous solution of mineral acid into at least two substreams before it is fed into the plurality of reaction stages connected in series,
feeding a first of these substreams to the first reaction stage,
feeding a second of these substreams to a reaction stage other than the first, where the inflow of dilute aqueous solution of mineral acid into the plurality of reaction stages connected in series is controlled by means of the pH in this reaction stage other than the first.

2. A process as claimed in claim 1, wherein a second of the abovementioned substreams is introduced into the last of the reaction stages connected in series.

3. A process as claimed in claim 1 or 2, wherein a pH of less than 2 is maintained in the reaction stage into which the second of the abovementioned substreams is fed.

4. A process as claimed in any of claims 1 to 3, wherein the mineral acid used is sulfuric acid.

5. A process as claimed in any of claims 1 to 4, wherein the mineral acid used is sulfuric acid, the second of the abovementioned substreams is fed into the last of the reaction stages connected in series and a pH in the range from 1.0 to 1.5 is maintained in this stage.

## Revendications

1. Procédé de préparation continue de sels d'hydroxyl-ammonium par réduction catalytique de monoxyde d'azote par de l'hydrogène dans une solution aqueuse diluée d'acide minéral, en plusieurs étapes réactionnelles agencées l'une derrière l'autre, **caractérisé en ce que**
on partage l'afflux de solution aqueuse diluée d'acide minéral en au moins deux courants partiels, avant l'amenée dans les plusieurs étapes réactionnelles agencées l'une derrière l'autre,
on amène un premier des courants partiels cités à la première étape réactionnelle,
on amène un deuxième des courants partiels cités à une autre étape réactionnelle que la première, en contrôlant l'afflux de solution aqueuse diluée d'acide minéral dans les plusieurs étapes réactionnelles agencées l'une derrière l'autre au moyen de la valeur du pH de cette étape réactionnelle autre que la première.

2. Procédé suivant la revendication 1, dans lequel on conduit un deuxième des courants partiels cités dans la dernière des étapes réactionnelles agencées l'une derrière l'autre.

3. Procédé suivant l'une des revendications 1 et 2, dans lequel, dans l'étape réactionnelle à laquelle on amène le deuxième des courants partiels cités, on maintient une valeur de pH inférieure à 2.

4. Procédé suivant l'une des revendications 1 à 3, dans lequel on met en oeuvre de l'acide sulfurique, comme acide minéral.

5. Procédé suivant l'une des revendications 1 à 4, dans lequel on met en oeuvre, comme acide minéral, de l'acide sulfurique, on conduit le deuxième des courants partiels cités dans la dernière des étapes réactionnelles agencées l'une derrière l'autre et, dans cette étape, on maintient une valeur de pH de l'ordre de 1,0 à 1,5.
